# DEMANDE DE BREVET EUROPEEN

(11) **EP 3 826 319 A2**
(43) Date de publication de la demande: **26.05.2021**
(21) Numéro de dépôt: 20208159.2
(22) Date de dépôt: 17.11.2020
(51) Int. Cl.: H04Q 9/00

(54) **PROCÉDÉ DE SURVEILLANCE ET DE RÉGULATION D'UN MILIEU ET DISPOSITIF POUR LA MISE EN OEUVRE D'UN TEL PROCÉDÉ**

(30) Priorité: 22.11.2019 FR 1913071
(71) Demandeur: Finesenses, 75008 Paris (FR)
(72) Inventeur: DELAVAUD, Christian, 33200 BORDEAUX (FR); PETROS, Olivier, 75008 PARIS (FR)
(74) Mandataire: Ipside

(57) **Abrégé**

L'invention concerne un procédé (1000) de surveillance et de régulation d'un milieu dont un état est caractérisé par un ensemble de P grandeurs, une pluralité de N capteurs délivrant chacun au moins une valeur mesurée d'une grandeur, lesdites grandeurs étant liées entre elles par un ensemble dynamique de relations R, ledit procédé comportant une étape d'acquisition d'informations (1100) au cours de laquelle chaque capteur réalise une mesure (1110) d'une grandeur pour obtenir l'au moins une valeur mesurée, une étape de traitement des informations (1200) issues des capteurs. Selon l'invention, l'étape de traitement des informations (1200) comporte une étape d'apprentissage (1210) au cours de laquelle des informations transmises par les capteurs et les configurations des capteurs sont stockées sous forme de matrices de paramètres dans un historique (203), lesdits paramètres étant hiérarchisés en terme de priorité, et une étape de comparaison (1220) au cours de laquelle les matrices de paramètres sont comparées aux matrices de paramètres se rapportant aux instants passés, ladite étape de comparaison permettant de déterminer la présence ou non d'une perturbation sur le milieu ou d'une anomalie de fonctionnement d'un capteur, et caractériser cette perturbation ou cette anomalie.

L'invention concerne également un dispositif pour la mise en œuvre du procédé selon l'invention.

## Description

### Domaine technique

L'invention appartient au domaine de la métrologie.

L'invention appartient plus particulièrement au domaine des réseaux de capteurs.

L'invention propose une approche réactive de la mesure permettant d'assurer une fiabilité de mesures issues de capteurs présentant des technologies différentes. L'invention trouve une application particulière dans les domaines de l'industrie, de l'environnement, de la santé et des transports.

### Technique antérieure

Un capteur est un dispositif sensible à un phénomène physique ou chimique et apte à transformer ledit phénomène en signal physique exploitable. De manière classique, un capteur comprend notamment un transducteur assurant une conversion d'un signal physique d'entrée en un signal physique de sortie.

Il existe diverses catégories de capteurs, parmi lesquels, de manière non exhaustive : capteurs passifs, capteurs actifs, capteurs analogiques, capteurs numériques.

Les capteurs sont parfois fournis avec des caractéristiques et des consignes d'utilisation restrictives, chaque capteur correspondant à une application précise avec des champs de mesure parfois limités. Chaque mesure est figée par les choix initiaux sur l'information recherchée.

Les capteurs sont par ailleurs souvent dépendants de boîtiers qui traitent le signal issu du capteur. La plupart de ces boîtiers sont propriétaires et ne sont pas compatibles d'un fabricant à un autre.

La demande de brevet US 2016/0142160 divulgue un procédé de maintenance d'un réseau de capteurs fondé sur une comparaison entre les signaux des capteurs permettant d'identifier l'éventuelle dégradation de performances des capteurs, et ainsi de ne plus tenir compte des valeurs issues des capteurs dont la dégradation de performances est avérée ; l'objectif étant une réduction des coûts d'exploitation des capteurs ou réseaux de capteurs.
Un premier inconvénient de cette solution est qu'elle préfigure d'un état de dégradation du capteur, dont elle tient compte, sans considérer la valeur de la mesure en elle-même et la cohérence du comportement du capteur en tant qu'élément d'un réseau de capteurs. Un autre inconvénient de cette solution est qu'elle est centrée sur le capteur et non sur le milieu.

### Exposé de l'invention

La présente invention vise à résoudre les problèmes de l'art antérieur.

La présente invention permet de différencier les informations cohérentes et les informations non cohérentes, et de permettre la correction et le réétalonnage en temps réel des capteurs en fonction notamment du comportement du milieu.

La présente invention permet également d'agir sur des actionneurs d'un système de régulation d'un milieu afin de se rapprocher d'un équilibre du milieu.

L'invention concerne un procédé de surveillance et de régulation d'un milieu dont un état est caractérisé par un ensemble de P grandeurs, une pluralité de N capteurs délivrant chacun au moins une valeur mesurée d'une grandeur, lesdites grandeurs étant liées entre elles par un ensemble dynamique de relations, ledit procédé comportant une étape d'acquisition d'informations au cours de laquelle chaque capteur réalise une mesure d'une grandeur pour obtenir l'au moins une valeur mesurée, une étape de traitement des informations issues des capteurs. Selon l'invention, l'étape de traitement des informations comporte une étape d'apprentissage au cours de laquelle des informations transmises par les capteurs et les configurations des capteurs sont stockées sous forme de matrices de paramètres dans un historique, lesdits paramètres étant hiérarchisés en terme de priorité, et une étape de comparaison au cours de laquelle les matrices de paramètres sont comparées aux matrices de paramètres se rapportant aux instants passés, ladite étape de comparaison permettant de déterminer la présence ou non d'une perturbation sur le milieu ou d'une anomalie de fonctionnement d'un capteur, et caractériser cette perturbation ou cette anomalie.

Dans un mode de mise en œuvre, l'étape d'acquisition d'informations comporte également d'une part une étape de classification au cours de laquelle les signaux issus des capteurs sont classés en signaux analogique ou numérique, et d'autre part une étape de conversion au cours de laquelle les signaux analogiques sont convertis en signaux numériques au moyen de convertisseurs analogique/numérique.

Dans un mode de mise en œuvre, le procédé comporte par ailleurs, en parallèle de l'étape de traitement des informations, une étape de correction au cours de laquelle des paramètres des convertisseurs analogique/numérique utilisés au cours de l'étape de conversion sont modifiés pour prendre en compte les informations transmises par les capteurs.

Dans un mode de mise en œuvre, les paramètres des convertisseurs comprennent la résolution et ou la fréquence d'échantillonnage.

Dans un mode de mise en œuvre, l'étape de traitement des informations comporte à l'issue de l'étape de comparaison, en cas de détection d'une perturbation impactant l'état du milieu, une étape de génération de nouvelles classes définissant une nouvelle hiérarchisation des paramètres et en cas d'absence d'impact de la perturbation sur le milieu, une étape de détermination des capteurs défaillants suivie d'une étape de gestion des défaillances.

Dans un mode de mise en œuvre, le procédé comporte une étape de régulation au cours de laquelle une action est réalisée sur des actionneurs, à l'issue de l'étape de traitement des informations.

L'invention concerne également un dispositif pour la surveillance et la régulation d'un milieu, comportant une pluralité de N capteurs délivrant chacun au moins une valeur mesurée d'une grandeur parmi un ensemble de P grandeurs, lesdites P grandeurs caractérisant un état du milieu et étant liées entre elles par un ensemble dynamique de relations R, au moins un capteur étant d'une technologie différente des autres capteurs, ledit dispositif comportant une interface, un solveur et un système de régulation du milieu comportant un ensemble d'actionneurs et de correcteurs, des paramètres des actionneurs et des correcteurs étant ajustables par le solveur, lesdits capteurs étant reliés par le biais de liaisons à ladite interface, laquelle est apte à transmettre les valeurs mesurées au solveur afin d'estimer une cohérence desdites valeurs mesurées sur la base des relations entre les grandeurs et d'agir sur le système de régulation pour parvenir à un équilibre du milieu. Selon l'invention, le solveur comporte des moyens d'apprentissage permettant de soumettre des signaux issus des capteurs à un apprentissage lors de leur passage dans l'interface.

Dans une forme de réalisation, au moins une liaison est une liaison unidirectionnelle permettant une transmission d'informations depuis l'au moins un capteur associé à l'au moins une liaison vers l'interface.

Dans une forme de réalisation, au moins une liaison est une liaison bidirectionnelle permettant une transmission d'informations depuis l'au moins un capteur associé à l'au moins une liaison vers l'interface et depuis l'interface vers l'au moins un capteur.

### Brève description des dessins

La figure 1 représente l'architecture d'un dispositif selon l'invention mis en œuvre pour assurer la régulation d'un milieu au moyen d'un système de régulation.
La figure 2 représente l'architecture de la figure 1 dans le contexte d'une anomalie d'un capteur.
La figure 3 représente de manière schématique une relation entre les grandeurs d'intérêt dans le cadre d'une application de l'invention à une salle destinée à accueillir du public.
La figure 4 représente de manière schématique le procédé selon l'invention.

### Description détaillée

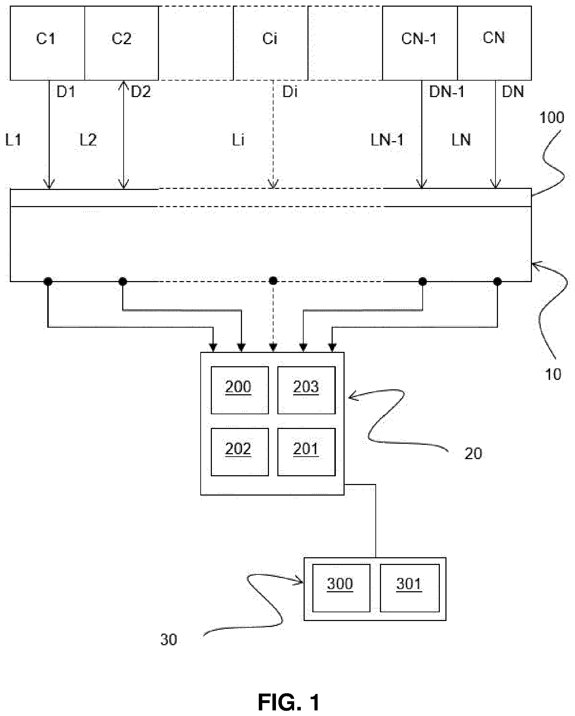

En référence à la figure 1, l'invention concerne un dispositif comprenant une pluralité de N capteurs C1, ..., Ci, ..., CN (ou réseau de capteurs), une interface 10 et un solveur 20.
Le solveur 20 communique avec un système de régulation 30 d'un milieu au sein duquel sont implémentés les capteurs C1,...,CN, lequel système de régulation comporte un ensemble d'actionneurs 300 et un ensemble de correcteurs 301 agissant sur les actionneurs 300 pour parvenir à un équilibre du milieu.

On entend par « équilibre du milieu » un état du milieu recherché pour parvenir à un objectif donné. En pratique, on recherche l'équilibre du milieu au moyen du système de régulation 30, en agissant sur un ensemble de P grandeurs G1, ..., GP différentes intervenant dans le milieu par le biais des actionneurs 300 et ou des correcteurs 301, ou tout autre moyen, par exemple un dispositif passif de régulation.

Chaque capteur Ci est apte à délivrer un ensemble de données Di incluant une valeur mesurée correspondant à un résultat de mesure par le capteur Ci d'une grandeur Gi.

Bien entendu, le nombre N de capteurs n'est pas nécessairement égal au nombre P de grandeurs, par exemple le réseau de capteurs pourra comporter plusieurs capteurs du même type (redondance).

Outre la valeur mesurée, les données Di délivrées par le capteur Ci sont par exemple une incertitude de mesure ou un état de fonctionnement dudit capteur.

Les grandeurs G1, ..., GP à mesurer sont liées entre elles par un ensemble dynamique de relations R, le nombre de relations pouvant être différent du nombre N de capteurs et étant amené à évoluer lors de la mise en œuvre de l'invention. A titre d'exemple non limitatif, une relation entre deux grandeurs peut être une relation mathématique (par exemple une loi physique) ou une courbe établie de manière expérimentale (par exemple un abaque).

On entend par « ensemble dynamique de relations » que l'ensemble des relations est susceptible d'évoluer au cours de la mise en œuvre de l'invention. En particulier, des relations entre les grandeurs peuvent être connues a priori, par exemple des relations de type loi physique, et des relations particulières dépendant du contexte de mise en œuvre de l'invention peuvent être déterminées lors de la mise en œuvre de l'invention en fonction notamment des signaux relevés par les capteurs.

Dans le contexte de l'invention, les capteurs C1, ..., CN peuvent être a priori de nature quelconque, par exemple les capteurs peuvent être des capteurs de type actif, passif, analogique, numérique, proprioceptif, extéroceptif. Il est toutefois essentiel qu'au moins une des grandeurs G1, ..., GP à mesurer diffère des autres, c'est-à-dire qu'au moins un capteur soit d'une technologie différente des autres capteurs. Il convient de noter que, même si une certaine redondance des capteurs est possible, l'invention est particulièrement adaptée à une configuration présentant une diversité technologique importante parmi les capteurs, c'est-à-dire une redondance de capteurs limitée voire nulle. Pour cette raison, il est considéré dans ce qui suit que toutes les grandeurs G1, ..., GP sont différentes l'une de l'autre. L'homme du métier comprendra toutefois que l'invention reste applicable à toute configuration de réseau de capteurs, quel que soit son degré de redondance, et que des grandeurs G1,...,GP peuvent être identiques entre elles.

Chaque capteur Ci présente classiquement une couche sensible et un transducteur, lequel transducteur peut être de tout type connu, par exemple : transducteur électromagnétique, transducteur électroacoustique, transducteur à base de nanotubes de carbone ou de graphène, substrat piézoélectrique, transducteur optique.

Dans un mode avantageux de réalisation de l'invention, les capteurs C1, ..., CN comportent chacun un microcontrôleur intégrant des fonctions lui permettant d'agir à la fois en routeur et en modem apte à fournir une connexion réseau à un réseau internet ; un tel capteur est qualifié dans la suite de « capteur connecté ». Préférentiellement la connexion réseau est à très haut débit, par exemple de type 4G ou 5G. On entend par « très haut débit » un accès internet offrant un débit supérieur à 30Mbit/s.

Le capteur connecté peut être autonome et avoir une alimentation en énergie fournie par la connexion réseau, ou être alimenté par une source d'énergie externe telle qu'une batterie.

Les capteurs connectés d'un premier ensemble de capteurs connectés peuvent échanger des informations entre eux, et l'un des capteurs connectés peut assurer le relais de ces informations vers un premier routeur distant apte à communiquer éventuellement avec un second routeur en communication avec un second ensemble de capteurs connectés.

Chaque capteur connecté est ainsi apte à communiquer aussi bien avec un autre capteur connecté qu'avec un routeur distant, et les capteurs connectés sont interchangeables, de sorte que l'architecture de capteurs connectés peut être facilement adaptée aux contraintes d'environnement liées à leur implantation, par exemple dans les milieux industriels, ruraux ou urbains.

La technologie des réseaux de capteurs sans fil fait intervenir un ensemble de capteurs aptes à interagir entre eux pour obtenir une analyse dynamique des données fournies par les capteurs.

Il est à noter que plus le débit de la connexion internet est important, plus la connexion internet permet une densité surfacique de capteurs connectés importante.

Préférentiellement, les capteurs sont des capteurs à faible consommation.

Les signaux en sortie des capteurs C1, ..., CN sont transmis à l'interface 10 par le biais de liaisons L1, ..., LN. Les signaux en sortie des capteurs C1, ..., CN peuvent être de types analogique (0/10V, 4/20mA, ...) ou numérique (Tout ou Rien, train d'impulsions, signal échantillonné, ...). A titre d'exemple non limitatif, les liaisons L1, ..., LN pour la transmission des signaux peuvent être, selon le type de signal : câblage, bus, dispositif de transmission série ou liaison sans fil.

Dans le cas d'un signal analogique, une conversion en signal numérique est assurée par un convertisseur analogique/numérique mis en place en sortie de capteur afin d'obtenir un signal numérique transmis à l'interface 10. La conversion analogique/numérique peut aussi être réalisée directement dans l'interface 10 au moyen d'un convertisseur analogique/numérique paramétrable dynamiquement ; il est ainsi possible d'agir en temps réel sur des paramètres d'échantillonnage, par exemple fréquence d'échantillonnage ou résolution.

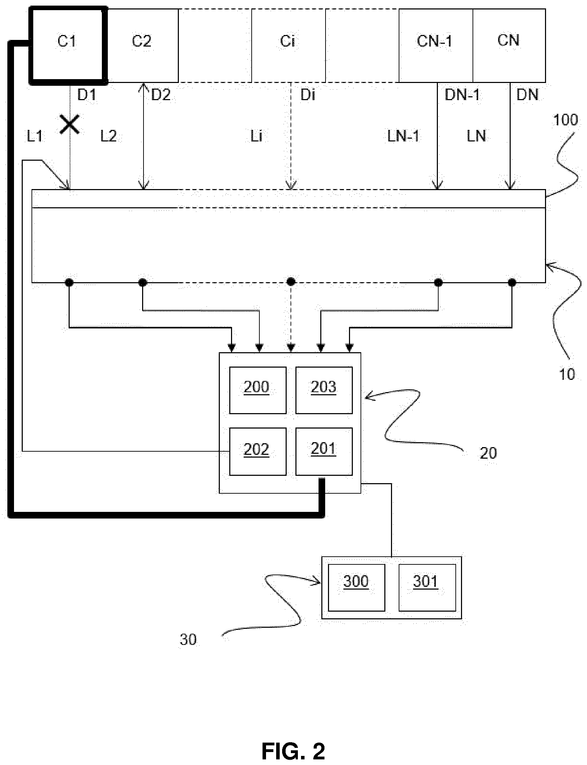

Chaque liaison Li peut être une liaison unidirectionnelle permettant une transmission d'informations depuis le capteur Ci associé à la liaison Li vers l'interface 10 ou bien bidirectionnelle pour permettre une transmission d'informations aussi bien depuis le capteur Ci vers l'interface 10 que depuis ladite interface vers ledit capteur. Une liaison bidirectionnelle permet ainsi d'agir sur les paramètres du capteur associé. En référence aux figures 1 et 2, la liaison L2 entre l'interface 10 et le capteur C2 est une liaison bidirectionnelle, symbolisée par une double flèche.

L'interface 10 comprend des moyens de conversion 100, comprenant par exemple un ensemble de filtres paramétrables et ou un ensemble de convertisseurs analogique/numérique, permettant d'adapter tout type de signal issu d'un capteur et de formater les signaux en vue de leur traitement. En particulier, les signaux analogiques sont convertis en signaux numériques afin de pouvoir transmettre plusieurs types d'informations entre les divers éléments.

Les signaux issus des capteurs sont ensuite transmis au solveur 20, qui qualifie les valeurs mesurées issues des capteurs. On entend par « qualification » l'attribution d'un degré de « sincérité » à une valeur mesurée issue d'une mesure, c'est-à-dire une évaluation de la fiabilité de cette mesure en regard des autres valeurs mesurées par les autres capteurs, sur la base des relations existant entre les grandeurs G1, ..., GP ainsi que sur la base des mesures transmises par le capteur dans le passé.

Le solveur 20 comporte des moyens d'apprentissage 200 permettant de soumettre les signaux à un apprentissage lors de leur passage dans l'interface 10. Cet apprentissage permet de détecter des incohérences de comportement des capteurs C1, ..., CN et filtrer ces données.

Pour chaque capteur Ci, lors de son intégration au réseau de capteurs C1, ... , CN, a lieu une phase d'apprentissage initiale au cours de laquelle une matrice de paramètres initiaux du capteur Ci est définie, incluant notamment une échelle de mesure et des seuils admissibles en butée haute et basse. La matrice de paramètres initiaux est par la suite conservée en mémoire.

La matrice de paramètres initiaux est mise à jour par les moyens d'apprentissage 200 pour former une matrice de paramètres dynamique, en fonction des signaux transmis aux moyens d'apprentissage 200 et des évènements se produisant dans un milieu dans lequel sont intégrés les capteurs. Les informations relatives aux évènements sont renseignées par un opérateur utilisant le dispositif selon l'invention.

La matrice de paramètres dynamique reprend les paramètres identifiés dans la matrice de paramètres initiaux, lesdits paramètres étant mis à jour en temps réel dans la matrice de paramètres dynamique. Les matrices de paramètres initiaux et de paramètres dynamique constituent donc des référentiels, respectivement un référentiel initial et un référentiel dynamique, permettant de suivre une évolution temporelle des comportements du capteur associé à ces matrices, en particulier sur les paramètres recensés dans les matrices de paramètres.

Les matrices de paramètres dynamique des capteurs sont gardées en mémoire pour former un historique 203 de l'évolution de comportements du capteur, ce qui permet une traçabilité évènementielle du comportement des capteurs.

Les matrice de paramètres initiaux et matrice de paramètre dynamique permettent d'établir respectivement un référentiel initial et un référentiel dynamique qui vont servir de référence pour détecter des comportements anormaux des capteurs.

La qualification par le solveur 20 se fait par comparaison de la matrice de paramètres dynamique avec la matrice de paramètres initiaux et l'historique 203 des matrices de paramètres dynamique. Un comportement incohérent d'un capteur, correspondant pour un état donné du milieu à un état du capteur différent de l'état dudit capteur observé par le passé pour un même état du milieu, ou une information erronée, sont identifiés par le solveur et, le cas échéant, le capteur défaillant est isolé.

Avantageusement, un ensemble d'indices, indice de pondération, indice de sensibilité, indice de réactivité, indice de cohérence et indice de permittivité, permet d'affiner l'analyse du comportement des capteurs.

L'indice de pondération regroupe les mesures collectées par les capteurs suivant un modèle d'acquisition basé sur le comportement des capteurs et l'état du milieu. Une valeur statistique est retenue pour corriger l'information devant être pondérée. L'indice de pondération s'applique sur les mesures, les hystérésis identifiés et la résultante des actions émises sur le milieu et l'influence sur la mise à l'équilibre du milieu.

L'indice de réactivité permet de corriger des inerties des actionneurs 300 par un dépassement d'action momentanée.

L'indice de cohérence se base sur les données des référentiels initiaux et dynamiques et permettent une aide à la décision pour une action sur un milieu.

L'indice de permittivité s'applique à des capteurs multiphysiques, il permet d'agir sur le spectre d'un capteur Ci et ainsi de réaliser une détection appropriée.

L'indice de sensibilité permet d'observer l'évolution de l'influence des actions sur les milieux dans la durée. Cette sensibilité contribue à l'équilibre des milieux et par son action limite les écarts de comportements et de situation.

Comme évoqué plus haut, tous les évènements concernant les états et comportements des capteurs C1, ..., CN, sont stockés dans l'historique 203 du solveur 20, ainsi que les traitements appliqués aux signaux issus desdits capteurs. Le solveur 20 compare ainsi l'état actuel de la chaîne de capteurs avec les données de l'historique pour qualifier les mesures et avantageusement ajuster le bloc d'indices pertinents lorsque ces indices sont utilisés.

Il existe une hiérarchie dans les paramètres observés au moyen des matrices de paramètres initiaux et dynamique, en fonction de leur importance ou de l'incertitude sur l'évolution des paramètres ; on parle de « classification des paramètres ». Chaque paramètre est ainsi rangé dans une classe, définissant un niveau de priorité sur l'observation de ce paramètre. Un paramètre peut par exemple être dans une classe « à risque », auquel cas la surveillance de ce paramètre est prioritaire, ou « aléatoire », la surveillance pouvant être abaissée pour cette classe par rapport à la classe « à risque ». Un paramètre peut appartenir à une classe « hybride » regroupant plusieurs autres types de classes.

En complément de l'historique 203, le solveur 20 comporte des moyens de détection et d'isolation d'anomalie 201. Dans le cas où le solveur 20 détecte une valeur mesurée correspondant à une anomalie ou incohérence de comportement de capteur, les moyens de détection et d'isolation d'anomalie 201 isolent ledit capteur dont la valeur mesurée est ignorée. Le solveur 20 procède alors à une modification des paramètres du capteur et ou un réétalonnage et ou une réinitialisation dudit capteur. Dans le cas où le réétalonnage et ou la réinitialisation et ou la modification des paramètres du capteur échouent, c'est-à-dire que l'on observe toujours une incohérence de comportement du capteur, les données Di fournies par ledit capteur sont considérées comme définitivement non exploitables et ne sont plus utilisées par le solveur 20.

La figure 2 illustre un cas d'anomalie de comportement du capteur C1. Le solveur 20 isole le capteur C1, ce qui est matérialisé sur la figure par un trait noir épais, et interrompt la liaison L1 entre le capteur C1 et l'interface 10, ce qui est matérialisé par un trait en pointillés et une croix. Le solveur 20 comporte préférentiellement des moyens de simulation 202 permettant de simuler le comportement du capteur comportant une anomalie durant la phase de reconfiguration dudit capteur ; le solveur 20 propose alors une métrologie prédictive. Cette simulation de mesure se base sur les résultats de mesure des autres capteurs ; les états et comportements des capteurs sont comparés aux états et comportements passés pour identifier des situations similaires, pour lesquelles situations similaires les valeurs de capteurs actifs sont semblables. Le solveur 20 est apte à ajuster la simulation en fonction des évènements survenant dans le milieu, de manière proportionnelle. Un degré de vigilance peut être activé selon l'importance du capteur dans le réseau de capteurs, pour faire passer l'ajustement de la simulation de ce capteur en priorité.

Ce schéma de fonctionnement dans le cas d'une anomalie peut bien entendu être généralisé au cas de plusieurs capteurs délivrant simultanément des informations incohérentes, tous les capteurs présentant une anomalie étant alors isolés et reconfigurés, les liaisons associées étant interrompues, et les comportements des capteurs pouvant être simulés par le solveur 20.

En-dehors du contexte d'une anomalie, les paramètres des capteurs C1, ..., CN peuvent également être reconfigurés en temps réel pour répondre à des exigences métrologiques comme l'adaptation de la plage de mesure et ou de la fréquence d'acquisition des données. De manière connue, des techniques de tolérance aux anomalies, préventives et ou curatives, sont incluses et apportent une stabilité du capteur en présence de conditions anormales de type erreurs logicielles ou composants défectueux, ce qui permet un fonctionnement optimal du capteur malgré des performances dégradées.

De manière classique, l'ensemble des correcteurs 301 peut comprendre au moins un correcteur de type PID (Proportionnel, Intégral, Dérivé). Un avantage de l'invention est que le solveur 20 peut agir en temps réel sur les paramètres de la partie Dérivée du correcteur PID, en fonction des résultats de traitement des signaux issus des capteurs, ce qui permet d'obtenir une sécurisation par itération d'une fréquence de traitement agissant sur l'équilibre du milieu, c'est-à-dire que les fréquences d'échantillonnage des capteurs peuvent être ajustées de manière dynamique pour modifier le nombre de données délivrées par les capteurs, et ainsi se rapprocher d'un nombre de données fourni permettant d'avoir une fiabilité de mesure optimale, selon une courbe de Gauss. La modification des paramètres de la partie Dérivée du correcteur PID permet ainsi d'augmenter ou diminuer le nombre de données mesurées, par adaptation de la fréquence d'échantillonnage des capteurs, et ainsi de s'adapter à l'évolution du milieu.

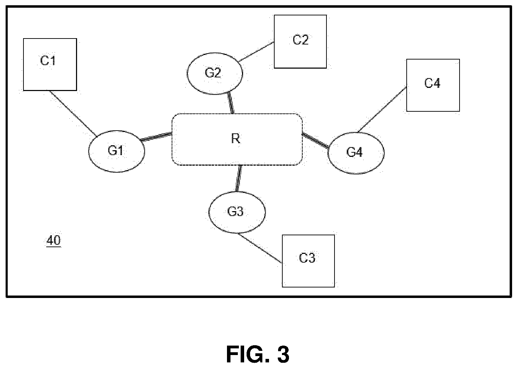

En référence à la figure 3, l'invention est considérée dans ce qui suit dans le contexte d'une salle 40 destinée à recevoir du public. Dans cet exemple d'application, le nombre de personnes présentes dans la salle ainsi que le flux d'entrée et de sortie sont inconnus.

On considère ici un ensemble de quatre capteurs C1, C2, C3, C4 correspondant à un capteur de température, un capteur de pression, et deux capteurs permettant de mesurer respectivement une quantité d'oxygène et une quantité de dioxyde de carbone. Les grandeurs G1, G2, G3, G4 d'intérêt sont donc ici la température, la pression, la quantité d'oxygène et la quantité de dioxyde de carbone. Elles sont liées entre elles par un ensemble dynamique de relations R, une relation pouvant être par exemple une courbe expérimentale P=f(T) donnant la pression en fonction de la température. Il convient de noter que le nombre de relations de l'ensemble dynamique de relations R entre les grandeurs n'est pas figé et est amené à évoluer lors de la mise en œuvre de l'invention. En particulier, la comparaison des données relevées avec les référentiels peut mettre en évidence de nouvelles relations entre les grandeurs.

L'objectif est double et consiste à apprécier les flux de personnes (entrées et sorties) tout en s'assurant de la fiabilité des mesures issues des capteurs. Il s'agit de pouvoir agir sur le milieu, par exemple en régulant la climatisation et ou le débit d'air entrant de la ventilation mécanique contrôlée, afin de tendre vers un équilibre du milieu correspondant à une température, pression, quantité d'oxygène et de dioxyde de carbone adaptées à la salle et à son utilisation.

Il est considéré qu'une augmentation de personnes dans la salle aboutit à une augmentation de température, de l'hygrométrie, de la concentration en dioxyde de carbone et à une diminution de la quantité d'oxygène. Ainsi une augmentation conséquente du nombre de personnes dans la salle peut par exemple conduire à une perte de concentration des individus ou à un stress.

Il peut être noté ici que les mesures prises séparément n'apportent pas une information en temps réel de la situation. Par exemple, l'inertie du capteur de température peut être trop importante pour que le capteur de température puisse révéler à lui seul des flux importants d'entrées et sorties de personnes en un temps relativement court. Par ailleurs, les variations dans les mesures pourraient être interprétées de diverses manières : une augmentation brutale de température pourrait par exemple provenir d'un départ d'incendie.

Dans le cas présent, l'appréciation du flux de personnes se base d'abord sur les quantités d'oxygène et de dioxyde de carbone mesurées. Les évolutions de l'hygrométrie et de la température sont utilisées pour qualifier les mesures. Au cours de l'apprentissage du dispositif selon l'invention, tout évènement au sein du milieu, par exemple l'ouverture d'une fenêtre de la salle 40, est signalé audit dispositif par un opérateur.

Comme mentionné plus haut, la fréquence d'échantillonnage de chaque capteur ainsi que leur étendue de mesure, c'est-à-dire la plage d'intérêts des valeurs des grandeurs mesurées entre un seuil haut et un seuil bas, peuvent être adaptées en temps réel pour s'adapter au milieu. A titre d'exemple, la fréquence d'échantillonnage peut par exemple être augmentée pour apprécier de manière plus précise les flux d'entrée et de sortie des personnes dans la salle. L'étendue de mesure du capteur de température peut également être limitée à une gamme de température attendue, et éventuellement augmentée si un évènement anormal tel qu'un départ d'incendie est détecté.

Avantageusement, dans l'exemple d'application illustré ci-dessus, l'utilisation de l'indice de réactivité pour la qualification des mesures peut avoir un avantage économique par exemple en permettant un contrôle efficace de l'inertie calorifique dans un milieu.

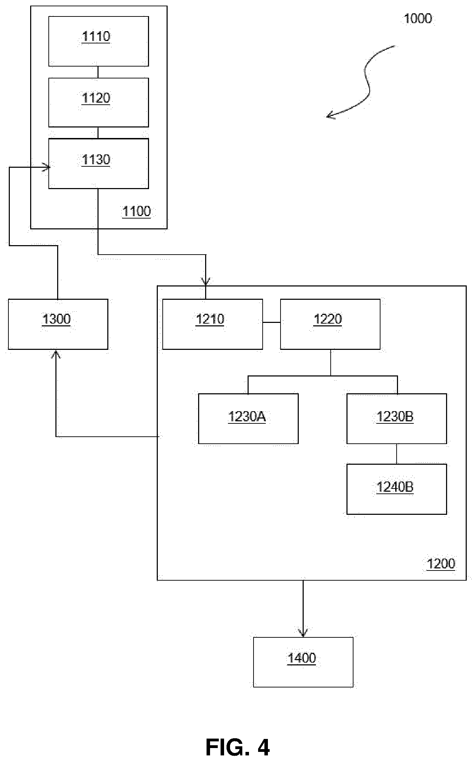

En référence à la figure 4, l'invention concerne également un procédé 1000 d'évaluation d'une fiabilité de mesures générées par un ensemble de capteurs.

Le procédé 1000 comporte une première étape d'acquisition d'informations 1100.

Au cours de l'étape d'acquisition d'informations 1100, chaque capteur Ci réalise une mesure 1110 d'une grandeur Gi, de sorte à obtenir une valeur mesurée de ladite grandeur.

Les signaux transmis par les capteurs font ensuite l'objet d'une classification de signal 1120 ; les signaux sont classés en tant que signal analogique ou numérique.

Après cette étape de classification du signal 1120, on vérifie au cours d'une étape de conversion du signal 1130 que les signaux transmis par le capteur sont des signaux numériques, si ce n'est pas le cas, les signaux analogiques sont convertis en signaux numériques au moyen de convertisseurs dédiés. Les signaux analogiques sont échantillonnés temporellement en tenant compte des contraintes sur la fréquence d'échantillonnage (fréquence de Nyquist) et une quantification est réalisée. Préférentiellement, un filtre anti-repliement (« *anti-aliasing filter »* en terminologie anglo-saxonne) est appliqué.

On entend par convertisseur dédié qu'il est adapté à une technologie de capteur donnée et à un signal délivré par ce capteur.

Les signaux numérisés sont ensuite transmis au solveur 20.

Au cours d'une étape de traitement des informations 1200, les informations transmises par les capteurs ainsi que les configurations des capteurs sont stockées dans l'historique 203 au cours d'une étape d'apprentissage 1210. On entend par « configuration d'un capteur » les valeurs données à l'ensemble des paramètres du capteur, lesdits paramètres du capteur incluant notamment : type de capteur (analogique ou numérique), priorité accordée aux données issues du capteur dans le réseau de capteurs (ou classes des paramètres), seuils haut et bas de l'étendue de mesure dudit capteur.

L'ensemble des données relevées au cours du temps combiné aux classes formant les niveaux de priorité forme des données référentielles des comportements des capteurs. On entend par « données relevées » les informations issues des capteurs et les configurations de capteurs à un instant donné, incluant les paramètres rentrés dans les matrices de paramètres initiaux et dynamique. Les matrices de paramètres sont mises à jour au cours de cette étape d'apprentissage 1210.

Au cours d'une étape de comparaison 1220, les données relevées sont comparées aux référentiel initiaux et dynamiques se rapportant aux instants passés ; la comparaison permet de caractériser une perturbation. La connaissance de la corrélation entre les grandeurs G1,...,GP permet de mettre en évidence les divergences de comportement d'un capteur par rapport à un autre.

On entend par « perturbation » un évènement influençant l'état du milieu, ou un écart de comportement ou anomalie de fonctionnement d'au moins un capteur. A titre d'exemple, dans le contexte de l'application de l'invention à une salle destinée à recevoir du public, un évènement peut être l'arrivée d'un groupe de personnes dans la salle, ou un départ d'incendie, ou une défaillance d'un capteur.

On entend par « caractériser une perturbation » le fait d'identifier le type de perturbation, par exemple identifier s'il s'agit d'une anomalie de fonctionnement d'un capteur ou d'un évènement influençant le milieu.

En cas de détection d'une perturbation impactant l'état du milieu, il s'ensuit une étape de génération de nouvelles classes 1230A pour former de nouvelles matrices de paramètres et de nouveaux référentiels. Les nouvelles classes tiennent compte de la perturbation qui créé un état nouveau du milieu, c'est-à-dire non encore identifié par le dispositif selon l'invention. La priorité peut ainsi être donnée à d'autres paramètres du capteur pour adapter le réseau de capteurs à la perturbation. Par exemple, en cas de hausse brutale de température, les paramètres du ou des capteurs de mesure de la teneur en oxygène et ou en dioxyde de carbone peuvent être modifiés pour identifier si la hausse de température provient ou non d'un incendie.

En cas d'absence d'impact de la perturbation sur le milieu, absence d'impact par exemple validée par un opérateur, mais en présence de perturbation sur les capteurs, c'est-à-dire que sont observées aussi bien une coïncidence entre les données relevées et les référentiels, l'étape de comparaison 1220 est suivie d'une étape de détermination des capteurs défaillants 1230B, c'est-à-dire les capteurs fournissant une mesure non exploitable.

Au cours d'une étape ultérieure de gestion des défaillances 1240B, les capteurs défaillants sont isolés. Les capteurs défaillants sont alors reconfigurés, reparamétrés et ou réétalonnés et ou réinitialisés par un ensemble de correcteurs du dispositif selon l'invention, puis réintégrés au réseau de capteurs. Les correcteurs peuvent également agir sur les convertisseurs analogique/numérique. Après reconfiguration, reparamétrage et ou réinitialisation, le comportement du capteur est vérifié sur l'ensemble de l'échelle de mesure du capteur, en considérant une plage de l'échelle de mesure après l'autre. Par exemple, pour un capteur de température dont l'échelle de mesure s'étend de 0 à 100 degrés Celsius, le comportement du capteur peut être vérifié sur la plage allant de 0 à 10 degrés, puis 10 à 20 degrés, etc.

En attendant leur réintégration, si leur technologie le permet, leur comportement est simulé par le solveur. La simulation est réalisée sur la base des comportements des capteurs observés par le passé.

Si le comportement du capteur est toujours anormal après réintégration, le capteur est définitivement isolé.

En parallèle de l'étape de traitement 1200, une étape de correction 1300 est mise en œuvre, au cours de laquelle le solveur 20 agit sur les traitements mis en œuvre lors de la numérisation du signal au cours de l'étape de conversion des signaux 1130, en fonction de l'analyse des données relevées et des données référentielles ; le solveur 20 est ainsi apte par exemple à modifier la résolution des convertisseurs analogique/numérique, modifier l'échelle et ou l'étendue de mesure.

A l'issue de l'étape de traitement 1200, le milieu est équilibré, au cours d'une étape de régulation 1400, par action sur les actionneurs 300 sur la base des données communiquées par les capteurs et des traitements réalisés par le solveur 20. Au cours de cette même étape, une action est possible sur les correcteurs 301 agissant sur les actionneurs, en particulier une action en temps réel sur la partie Dérivée des correcteurs de type PID.

L'invention, grâce notamment à l'ensemble formé par l'interface 10 et le solveur 20, permet ainsi d'analyser les incohérences sur les données Di transmises par le capteur Ci et de les corriger.

Selon l'invention, une fiabilité de mesure est assurée grâce à l'utilisation de capteurs fonctionnant au moyen de technologies différentes réalisant simultanément des mesures de grandeurs dont on connaît la corrélation. Le fonctionnement optimal des capteurs est assuré d'une part grâce à la reconfiguration en temps réel des capteurs par l'ensemble formé de l'interface 10 et du solveur 20, et d'autre part grâce à une communication entre les capteurs et le système de régulation ou les interfaces homme-machine permettant la gestion dynamique des actionneurs agissant sur l'équilibre du milieu et sur leurs correcteurs.

Un avantage de la présente invention est qu'elle ne préfigure pas d'un état de performance d'un capteur. La mesure fournie par un capteur est prise en compte tant qu'elle n'est pas jugée comme présentant une incohérence, et qu'une reconfiguration ne permet pas de retrouver une cohérence de la mesure.

## Revendications

1. Procédé (1000) de surveillance et de régulation d'un milieu dont un état est **caractérisé par** un ensemble de P grandeurs (G1,...,GP), une pluralité de N capteurs (C1,... CN) délivrant chacun au moins une valeur mesurée d'une grandeur (G1, ..., GP), lesdites grandeurs étant liées entre elles par un ensemble dynamique de relations R, ledit procédé comportant une étape d'acquisition d'informations (1100) au cours de laquelle chaque capteur (Ci) réalise une mesure (1110) d'une grandeur (Gi) pour obtenir l'au moins une valeur mesurée, une étape de traitement des informations (1200) issues des capteurs, ledit procédé étant **caractérisé en ce que** l'étape de traitement des informations (1200) comporte une étape d'apprentissage (1210) au cours de laquelle des informations transmises par les capteurs et les configurations des capteurs sont stockées sous forme de matrices de paramètres dans un historique (203), lesdits paramètres étant hiérarchisés en terme de priorité, et une étape de comparaison (1220) au cours de laquelle les matrices de paramètres sont comparées aux matrices de paramètres se rapportant aux instants passés, ladite étape de comparaison permettant de déterminer la présence ou non d'une perturbation sur le milieu ou d'une anomalie de fonctionnement d'un capteur, et caractériser cette perturbation ou cette anomalie.

2. Procédé selon la revendication 1 **caractérisé en ce que** l'étape d'acquisition d'informations (1100) comporte également d'une part une étape de classification de signal (1120) au cours de laquelle les signaux issus des capteurs sont classés en signaux analogique ou numérique, et d'autre part une étape de conversion (1130) au cours de laquelle les signaux analogiques sont convertis en signaux numériques au moyen de convertisseurs analogique/numérique.

3. Procédé selon la revendication 2 **caractérisé en ce qu'**il comporte par ailleurs, en parallèle de l'étape de traitement des informations (1200), une étape de correction (1300) au cours de laquelle des paramètres des convertisseurs analogique/numérique utilisés au cours de l'étape de conversion (1130) sont modifiés pour prendre en compte les informations transmises par les capteurs.

4. Procédé selon la revendication 3 **caractérisé en ce que** les paramètres des convertisseurs comprennent la résolution et ou la fréquence d'échantillonnage.

5. Procédé selon l'une quelconque des revendications précédentes, **caractérisé en ce que** l'étape de traitement des informations (1200) comporte à l'issue de l'étape de comparaison (1220), en cas de détection d'une perturbation impactant l'état du milieu, une étape de génération de nouvelles classes (1230A) définissant une nouvelle hiérarchisation des paramètres et en cas d'absence d'impact de la perturbation sur le milieu, une étape de détermination des capteurs défaillants (1230B) suivie d'une étape de gestion des défaillances (1240B).

6. Procédé selon l'une quelconque des revendications précédentes **caractérisé en ce qu'**il comporte une étape de régulation (1400) au cours de laquelle une action est réalisée sur des actionneurs, à l'issue de l'étape de traitement des informations (1200).

7. Dispositif pour la surveillance et la régulation d'un milieu, comportant une pluralité de N capteurs (C1, ..., CN) délivrant chacun au moins une valeur mesurée d'une grandeur parmi un ensemble de P grandeurs (G1, ..., GP), lesdites P grandeurs caractérisant un état du milieu et étant liées entre elles par un ensemble dynamique de relations R, au moins un capteur étant d'une technologie différente des autres capteurs, ledit dispositif comportant une interface (10), un solveur (20) et un système de régulation (30) du milieu comportant un ensemble d'actionneurs (300) et de correcteurs (301), des paramètres des actionneurs et des correcteurs étant ajustables par le solveur (20), lesdits capteurs étant reliés par le biais de liaisons (L1, ..., LN) à ladite interface, laquelle est apte à transmettre les valeurs mesurées au solveur (20) afin d'estimer une cohérence desdites valeurs mesurées sur la base des relations entre les grandeurs (G1, ..., GP) et d'agir sur le système de régulation (30) pour parvenir à un équilibre du milieu, ledit dispositif étant **caractérisé en ce que** le solveur comporte des moyens d'apprentissage (200) permettant de soumettre des signaux issus des capteurs à un apprentissage lors de leur passage dans l'interface (10).

8. Dispositif selon la revendication 7 **caractérisé en ce qu'**au moins une liaison est une liaison unidirectionnelle permettant une transmission d'informations depuis l'au moins un capteur associé à l'au moins une liaison vers l'interface (10).

9. Dispositif selon la revendication 7 ou la revendication 8 **caractérisé en ce qu'**au moins une liaison est une liaison bidirectionnelle permettant une transmission d'informations depuis l'au moins un capteur associé à l'au moins une liaison vers l'interface (10) et depuis l'interface (10) vers l'au moins un capteur.
